# EUROPÄISCHE PATENTSCHRIFT

(11) **EP 0 937 370 B1**
(45) Veröffentlichungstag und Bekanntmachung des Hinweises auf die Patenterteilung: **09.06.2004**
(21) Anmeldenummer: 97945796.7
(22) Anmeldetag: 27.10.1997
(51) Int. Cl.: H04Q 11/04

(54) **VERFAHREN ZUM ERSATZSCHALTEN VON ÜBERTRAGUNGSEINRICHTUNGEN ZUR BIDIREKTIONALEN ÜBERTRAGUNG VON ATM-ZELLEN**
SWITCHING TRANSMISSION UNITS TO AN EQUIVALENT CIRCUIT FOR THE PURPOSES OF BIDIRECTIONAL ASYNCHRONOUS CELL TRANSFER
COMMUTATION SUR CIRCUIT EQUIVALENT D'UNITES DE TRANSMISSION AUX FINS DU TRANSFERT BIDIRECTIONNEL DE CELLULES EN MODE ASYNCHRONE

(30) Priorität: 07.11.1996 DE 19646016
(43) Veröffentlichungstag der Anmeldung: 25.08.1999
(73) Patentinhaber: Siemens Aktiengesellschaft, 80506 München (DE)
(72) Erfinder: KLINK, Joachim, D-81369 München (DE)
(86) Internationale Anmeldenummer: PCT/DE1997/002495
(87) Internationale Veröffentlichungsnummer: WO 1998/020699

(56) Entgegenhaltungen:
- WO-A-95/24085
- DE-A- 4 331 577
- MITSUHIRO AZUMA ET AL: "NETWORK RESTORATION ALGORITHM FOR MULTIMEDIA COMMUNICATION SERVICES AND ITS PERFORMANCE CHARACTERISTICS" IEICE TRANSACTIONS ON COMMUNICATIONS, Bd. E78-B, Nr. 7, 1.Juli 1995, Seiten 987-994, XP000532482
- EIJI OKI ET AL: "MULTIPLE-AVAILABILITY-LEVEL ATM NETWORK ARCHITECTURE" IEEE COMMUNICATIONS MAGAZINE, Bd. 33, Nr. 9, 1.September 1995, Seiten 80-88, XP000528013

## Beschreibung

Die Erfindung betrifft ein Verfahren gemäß dem Oberbegriff des Patentanspruchs 1.

Ein derartiges Verfahren ist bereits aus der internationalen Patentanmeldung W094/28646 bekannt.

Dieses bekannte Verfahren bezieht sich auf Übertragungseinrichtungen der synchronen digitalen Hierarchie (SDH). Dabei ist eine Übertragungseinrichtung zur bidirektionalen Übertragung von Digitalsignalen vorgesehen, bei der zwei als Endstellen fungierende Vermittlungseinrichtungen über eine Betriebsstrecke und eine Ersatzstrecke miteinander verbunden sind. Die beiden Endstellen enthalten jeweils eine Überwachungsvorrichtung zur Feststellung von Übertragungsstörungen. Eine durch die Überwachungsvorrichtung steuerbare Schaltvorrichtung verbindet eine Empfangsvorrichtung in einen ersten Schaltzustand mit der Betriebsstrecke und in einem zweiten Schaltzustand mit der Ersatzstrecke. Zwischen den Steuervorrichtungen der beiden Endstellen werden Steuerinformationen ausgetauscht. Die Schaltvorrichtung wird jeweils durch die örtliche Überwachungsvorrichtung in Abhängigkeit von örtlichen und in den von der Gegenstelle empfangenen Steuerinformationen enthaltenen Steuerkriterien gesteuert.

Nachteilig hieran ist, daß dieses bekannte Verfahren sich auf Übertragungseinrichtungen der synchronen digitalen Hierarchie bezieht und nicht auf Übertragungseinrichtungen des asynchronen Transfermodus (ATM) übertagen werden kann. Weiterhin gelangt dieses bekannte Verfahren auf 1+1 bzw. 1:1 Strukturen zur Anwendung. Bei komplexeren Strukturen wie beispielsweise 1:n Strukturen kann es hier allerdings zu Fehlverbindungen kommen.

Weiterhin ist aus der Druckschrift IEICE Transactions on Communications, Bd. E78-B, Nr 7, 1. Juli 1995, Seiten 987-994, Mitsuhiro Azuma et al.(XP532482) ein Verfahren und eine Vorrichtung zum Ersatzschalten von ATM-Verbindungen bekannt. Falls ein Knoten oder eine Strecke ausfällt, wird auf eine Ersatzstrecke umgeschaltet. 1:1, 1+1 oder 1:N Strukturen werden hier aber nicht angesprochen.

Der Erfindung liegt die Aufgabe zugrunde, ein Verfahren der eingangs genannten Art derart weiterzubilden, daß Zellen, die nach einem asynchronen Transfermodus übertragen werden, mit großer Sicherheit über eine Mehrzahl von Netzknoten übertragen werden können.

Die Erfindung wird ausgehend von den im Oberbegriff des Patentanspruchs 1 angegebenen Merkmale durch dessen kennzeichnende Merkmale gelöst.

Vorteilhaft an der Erfindung ist insbesondere, daß lediglich eine Ersatzstrecke vorgesehen wird, die einer Mehrzahl von Betriebsstrecken zugeordnet ist. Über diese Ersatzstrecke werden die ATM-Zellen der gestörten Betriebstrecke übertragen nach Maßgabe von Prioritäten übetragen. Die Durchschaltung durch die empfangende Vermittlungseinrichtung erfolgt dann unter zu Hilfenahme einer logischen Verbindungsnummer. Damit ist der Vorteil verbunden, daß die Verbindung im Fehlerfall ohne Einschränkung aufrechterhalten werden kann.

Vorteilhafte Weiterbildungen der Erfindung sind in den Unteransprüchen anggegeben.

Die Erfindung wird im folgenden anhand eines Ausführungsbeispiels näher erläutert.

Es zeigen:
- Figur 1: das erfindungsgemäße Verfahren zur bidirektionalen Übertragung von ATM-Zellen in einer 1:n-Struktur,
- Figur 2: eine spezielle Ausgestaltung des erfindungsgemäßen Verfahrens in einer 1:1-Struktur,
- Figur 3: eine weitere spezielle Ausgestaltung des erfindungsgemäßen Verfahrens in einer 1+1-Struktur.
- Figur 4: die verwendeten Prioritäten, nach deren Maßgabe die Ersatzschaltung erfolgt.

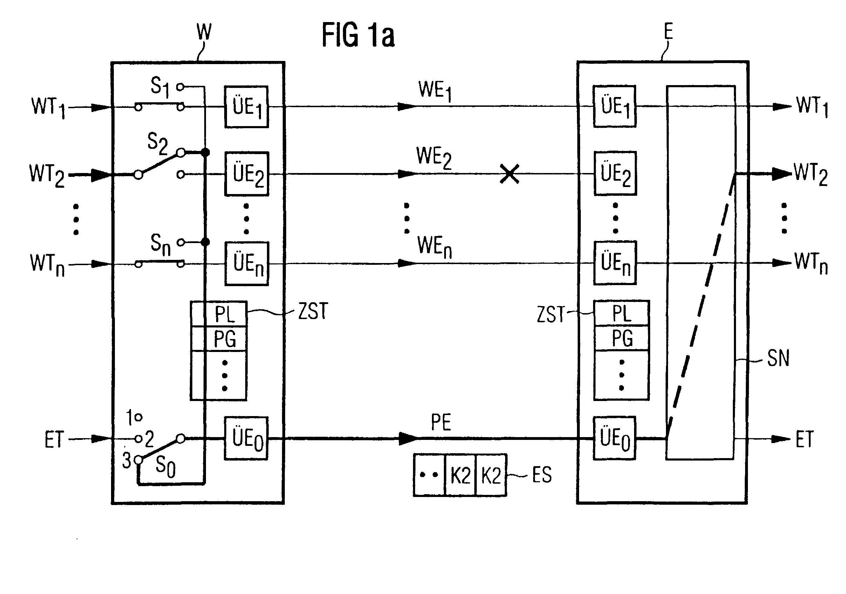

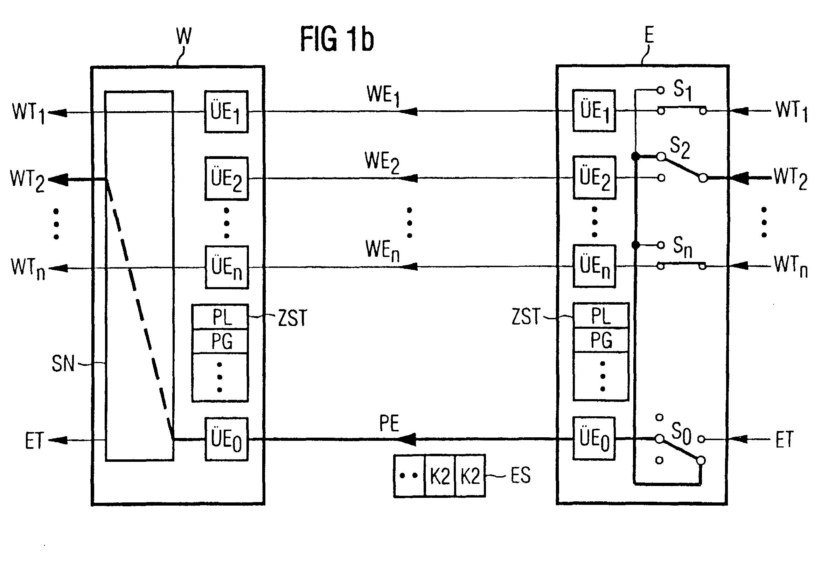

Gemäß Fig. 1 sind zwei Knoten eines ATM-Netzes aufgezeigt, welche jeweils als Vermittlungseinrichtung W, E ausgebildet sind. In vorliegendem Ausführungsbeispiel wird davon ausgegangen, daß es sich bei diesen Vermittlungseinrichtungen um Cross Connect Vermittlungseinrichtungen handelt. Die Verwendung derart ausgebildeter Vermittlungseinrichtungen bedeutet jedoch keine Einschränkung der Erfindung, andere Vermittlungseinrichtungen sind ebenso verwendbar. In Fig. 1a ist die Übertragung von ATM-Zellen von der Vermittlungseinrichtung W zur Vermittlungseinrichtung E hin aufgezeigt, während in Fig. 1b die Rückrichtung dieser Verbindung offenbart ist.

Die Vermittlungseinrichtungen W, E sind über Betriebsstrecken WE₁...WEₙ (WORKING ENTITY) sowie lediglich eine Ersatzstrecke PE (PROTECTION ENTITY) miteinander verbunden sind. Weiterhin sind Schaltereinrichtungen S₀...Sₙ (BRIDGE) aufgezeigt, über die die ankommenden ATM-Zellen und die zugehörigen Betriebsstrecken WE₁...WEₙ zur Vermittlungseinrichtung E hin übertragen werden. Die ATM-Zellen werden nach einem asynchronen Transfermodus übertragen und weisen jeweils einen Kopfteil sowie einen Informationsteil auf. Der Kopfteil dient der Aufnahme von Verbindungsinformation während der Informationsteil der Aufnahme von Nutzinformation dienlich ist. Die im Kopfteil enthaltene Verbindungsinformation ist als logische Information ausgebildet und wird in der Regel als virtuelle Pfadnummer VPI bzw. virtuelle Kanalnummer VCI ausgebildet.

Weiterhin sind Fig. 1 Selektionseinrichtungen SN entnehmbar, deren Aufgabe darin besteht, die über die Betriebsstrecken WE₁...WEₙ übertragenen ATM-Zellen dem Ausgang der Vermittlungseinrichtung E zuzuführen. Gemäß vorliegendem Ausführungsbeispiel sind die Selektionseinrichtungen SN als ATM-Koppelfeld ausgebildet. Das ATM-Koppelfeld SN ist sowohl in der Vermittlungseinrichtung W als auch der Vermittlungseinrichtung E enthalten.

Weiterhin sind in beiden Vermittlungseinrichtungen W, E Überwachungsvorrichtungen ÜE₀...ÜEₙ (PROTECTION DOMAIN SINK, PROTECTION DOMAIN SOURCE) aufgezeigt, die den Zustand bzw. die Qualität der über die Betriebstrecken WE₁..WEₙ übertragenen ATM-Zellen überwachen. Beispielsweise werden die ATM-Zellen der Verbindung mit der Nummer 1 WT₁ bevor sie über die Betriebsstrecke WE₁ zur Vermittlungseinrichtung E hin übertragen werden, in der Überwachungseinrichtung ÜE₁ der Vermittlungseinrichtung W mit Steuerinformation versehen, die die Überwachungseinrichtung ÜE₁ der empfangenden Vermittlungseinrichtung E entnimmt und überprüft. Anhand dieser Steuerinformation kann dann ermittelt werden, ob die Übertragung der ATM-Zelle korrekt erfolgt ist oder nicht. Insbesondere kann hier ein Totalausfall (SIGNAL FAIL FOR WORKING ENTITY) einer der Betriebsstrecken WE₁...WEₙ ermittelt werden. Ebenso sind aber auch unter Verwendung bekannter Verfahren Verschlechterungen in der Übertragungsqualität (SIGNAL DEGRADE) ermittelbar.

Die Überwachungsvorrichtungen ÜE₁...ÜEₙ schließen die Betriebsstrecken WE₁...WEₙ auf beiden Seiten ab. Weitere Überwachungsvorrichtungen ÜE₀ sind auf beiden Enden der Ersatzstrecke PE angeordnet. Diese soll im Fehlerfall als Übertragungsstrecke für die außer Betrieb genommene Betriebsstrecke WE_{X} dienen. Weiterhin werden hierüber Ersatzschalteprotokolle ES übertragen, so daß die Intaktheit der Ersatzstrecke oberste Priorität hat.

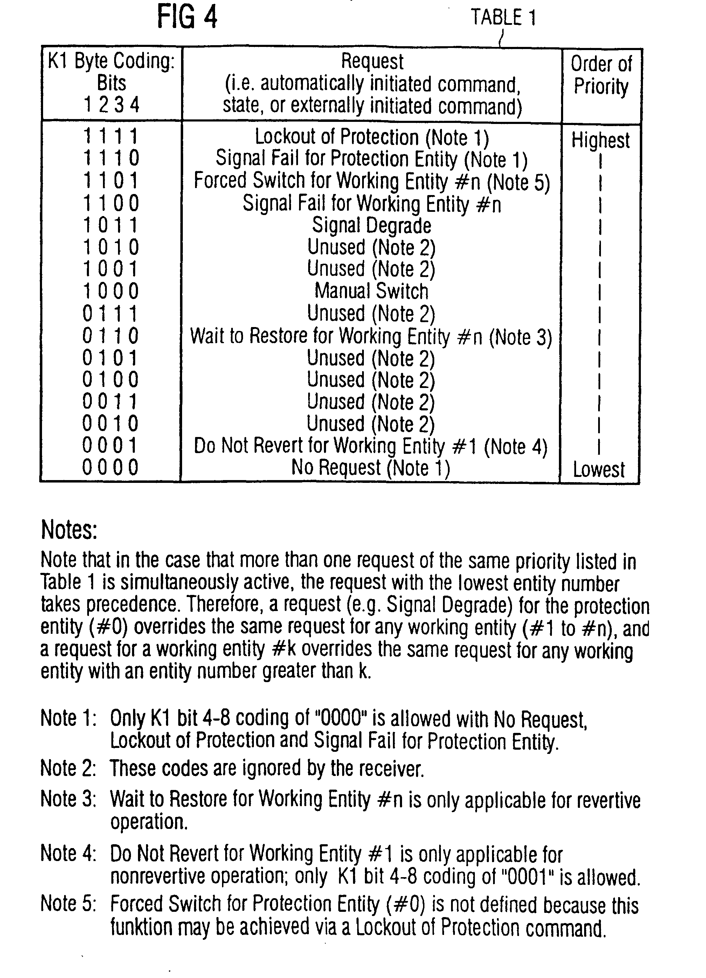

In jeder der Vermittlungseinrichtungen W, E sind ferner zentrale Steuereinrichtungen ZST angeordnet. Diese beinhalten jeweils Prioritätstabellen PG, PL. Bei den Prioritätstabellen PL handelt es sich um lokale Prioritätstabellen, in denen der Zustand und Priorität der lokalen Vermittlungseinrichtung abgespeichert ist. Bei den Prioritätstabellen PG handelt es sich um globale Prioritätstabellen, in den Zustand und Priorität der lokalen aber auch verbleibenden Vermittlumngseinrichtung ist. Durch die Einführung der Prioritäten wird erreicht, daß beim gleichzeitigen Auftreten mehrerer Ersatzschalteanforderungen festgelegt ist, welche Betriebstrecke ersatzgeschaltet wird. Ebenso sind in den Prioritätstabellen die Ersatzschalteanforderungen priorisiert. So besteht beispielsweise eine hochpriore Anforderung von einem Anwender. Da dieser Ersatzschalteanforderung eine hohe Priorität zugewiesen ist, wird sie somit bevorzugt gesteuert. Eine von einer der Betriebsstrecken gesteuerte Ersatzschalteanforderung wird somit zurückgewiesen.Die einzelnen Prioritäten sind in Fig. 4 aufgezeigt.

Die zentralen Steuereinrichtungen ZST der Vermittlungseinrichtungen W, E tauschen Informationen in einem Ersatzschalteprotokoll ES aus. Dieses Protokoll wird über die Ersatzstrecke PE übertragen und von der zugeordneten Überwachungseinrichtung ÜE₀ der jeweils empfangenden Vermittlungseinrichtung entnommen, und der betreffenden zentralen Steuereinrichtung ZST zugeführt. Weiterhin wird in der zentralen Steuervorrichtung ZST dafür Sorge getragen, daß im Fehlerfall die Schaltvorrichtungen S₀...Sₙ in entsprechender Weise gesteuert werden.

Im Protokoll ES sind Informationen K2 abgelegt. Dabei handelt es sich um Informationen bezüglich der momentanen Zustände der Schaltvorrichtungen. Weiterhin sind noch Informationen K1 abgelegt. Dabei handelt es sich um Informationen bezüglich der generierten Ersatzschalteanforderung. Das Protokoll wird jeweils bei Generierung der Ersatzschalteanforderung zwischen den beiden Vermittlungseinrichtungen ausgetauscht. In einer speziellen Ausgestaltung der Erfindung wird vorgesehen, das Protokoll ES zyklisch zwischen beiden Vermittlungseinrichtungen zu übertragen.

Im folgenden wird nun die Durchführung des erfindungsgemäßen Verfahrens anhand Fig. 1 näher erläutert. Dabei ist gemäß Fig. 1a die Übertragung der ATM-Zellen von der Vermittlungseinrichtung W zur Vermittlungseinrichtung E über die Betriebsstrecken WE₁...WEₙ aufezeigt. In Fig. 1b ist die zugehörige Gegenrichtung (bidirektionale Übertragung) erläutert. Gemäß dem vorliegenden Ausführungsbeispiel wird nun zunächst davon ausgegangen, daß die Betriebstrecken WE₁...WEₙ noch intakt sind und die ankommenden ATM-Zellen korrekt übertragen.

Gemäß Fig. 1a werden die ATM-Zellen der Vermittlungseinrichtung W zugeführt. Die ATM-Zellen gehören dabei einer Vielzahl von Verbindungen WT₁...WTₙ an. Die einzelnen Verbindungen werden anhand der im Kopfteil der ATM-Zellen eingetragenen logischen Verbindungsnummer VPI unterschieden.

Die Schaltvorrichtungen S₁...Sₙ der Vermittlungseinrichtung W sind in diesem (noch intakten) Betriebsfall derart geschaltet, daß die ATM-Zellen den Überwachungseinrichtungen ÜE₁... ÜEₙ unmittelbar zugeführt werden. In letzteren werden die ATM-Zellen mit den bereits angesprochenen Steuerinformationen beaufschlagt und über die in Frage kommende Betriebsstrecke WE₁...WEₙ den Überwachungseinrichtungen ÜE₁... ÜEₙ der empfangenden Vermittlungseinrichtung E zugeführt. Dort wird die mitgeführte Steuerinformation überprüft und gegebenenfalls ein Fehlerfall ermittelt. Ist die Übertragung korrekt erfolgt, werden die ATM-Zellen dem ATM-Koppelfeld SN zugeführt. Hier wird die logische Verbindungsinformation VPI ausgewertet und nach Maßgabe dieser Auswertung die ATM-Zelle über dem in Frage kommenden Ausgang des Koppelfeldes SN in das ATM Netz weitergeleitet.

Die Ersatzstrecke PE kann während dieser Zeit ungenutzt bleiben. Gegebenenfalls können aber auch während dieser Zeit Sonderdaten (EXTRA TRAFFIC) der Vermittlungseinrichtung E zugeführt werden. Die Schaltvorrichtung S₀ der Vermittlungseinrichtung W nimmt also die Stellungen 1 oder 3 ein. Die Übertragung der Sonderdaten erfolgt ebenfalls in ATM-Zellen. Die Überwachungseinrichtung ÜE₀ der der Vermittlungseinrichtung W beaufschlagt die ATM-Zellen in gleicher Weise mit Steuerinformationen wie dies im Falle der über die Betriebsstrecken WE₁...WEₙ bereits geschildert wurde. Ebenso erfolgt die Überwachung der Strecke.

Im folgenden wird nun davon ausgegangen, daß die Betriebsstrecke WE₂ ausgefallen ist. Dies wird von der dieser zugeordneten Überwachungseinrichtung ÜE₂ der empfangenden Vermittlungseinrichtung E ermittelt. Die Ersatzschalteanforderung K1 wird nun zur betreffenden zentralen Steuereinrichtung ZST übermittelt, und dort in der lokalen Prioritätstabelle PL sowie der globalen Prioritätstabelle PG abgelegt.

Nach Maßgabe der in der globalen Prioritätstabelle PG abgespeicherten Prioritäten wird nun ermittelt, ob noch höher priore Anforderungen anstehen. Dies könnte beispielsweise die bereits angesprochene Umschalteanforderung des Anwenders (FORCED SWITCH FOR WORKING ENTITY) sein. Auch bei gleichzeitigem Auftreten anderer Störungsfalle wie beispielsweise der Betriebsstrecke WE₁ wäre die Ersatzschaltung dieser Betriebsstrecke bevorzugt zu behandeln, da dieser Betriebsstrecke eine höhere Prioität zugewiesen ist. In diesem Fall wird eine höher priorisierte Anforderung zuerst behandelt. Die in der lokalen und globalen Prioritätstabelle PL, PG gespeicherten Prioritäten sind in Fig. 4 aufgezeigt.

Sind keine höher priorisierte Anforderungen vorhanden, wird die Schaltvorrichtung S₂ der Vermittlungseinrichtung E in den verbleibenden Betriebszustand gesteuert, wie in Fig. 1b aufgezeigt. Im folgenden wird nun das Ersatzschalteprotokoll Es über die Ersatzstrecke PE der Vermittlungseinrichtung W zugeführt. In diesem Ersatzschalteprotokoll sind die bereits angesprochenen Informationen K1 und K2 enthalten. Wesentlich ist, daß die lokale Prioritätslogik die Ausgestaltung der Information K1 definiert, und die globale Prioritätslogik die Stellung der Schaltvorrichtung S₀.

Von der Überwachungseinrichtung ÜE₀ der Vermittlungseinrichtung E wird nun das Ersatzschalteprotokoll ES übernommen und der zentralen Steuereinrichtung ZST der Vermittlungseinrichtung W zugeführt. Liegen auch hier in der globalen Prioritätstabelle PG keine weiteren höherpriorisierten Anforderungen an, so wird auch hier die Schaltvorrichtung S₂ in entsprechender Weise angesteuert und eingestellt. Weiterhin wird die Schaltvorrichtung S₀ der Vermittlungseinrichtung W ebenfalls umgelegt. Der neue Status der beiden Schaltvorrichtungen S₀, S₂ wird der Vermittlungseinrichtung E quittiert, und in der dortigen globalen Prioritätstabelle PG aktualisiert. Die ATM-Zellen der Verbindung WT₂ werden somit über die Ersatzstrecke PE der Vermittlungseinrichtung E zugeführt.

Die Selektionseinrichtung SN der Vermittlungseinrichtung E ist als ATM Koppelfeld ausgebildet. Die über die Ersatzstrecke PE geleiteten ATM-Zellen werden diesem koppelfeld mzugeführt. Hier wird nun die logische Pfadnummer VPI dem Zellenkopf entnommen und ausgewertet und durch das Koppelfeld durchgeroutet. Das Ansteuern von Schalteinrichtungen entfällt somit in diesem Fall.

Da es sich bei diesen Verbindungen um eine bidirektionale Verbindung handelt, muß auch für die Übertragung der ATM-Zellen der Rückwärtsrichtung Sorge getragen werden. Dies erfolgt gemäß Fig. 1b in gleicher Weise, wie soeben für die Übertragung der ATM-Zellen von der Vermittlungseinrichtung W zur Vermittlungserinrichtung E hin geschildert wurde.

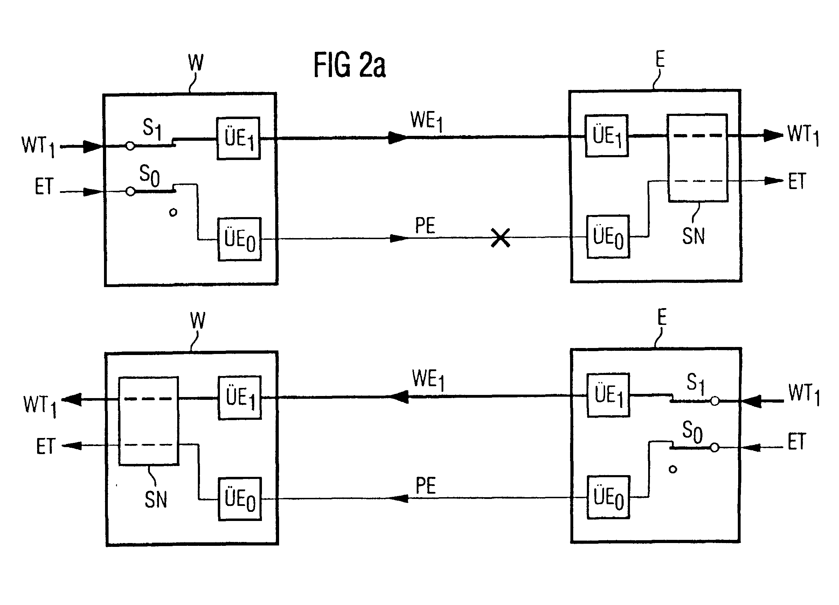

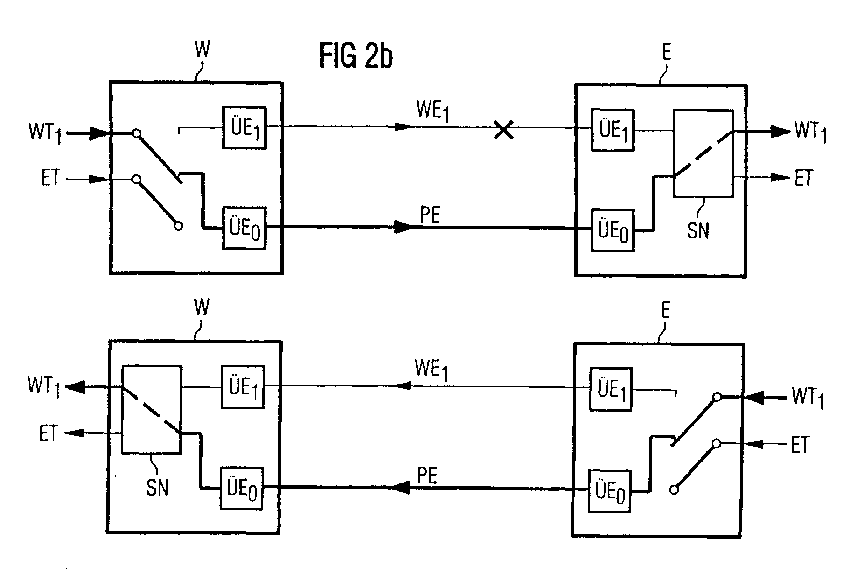

Gemäß dem soeben beschriebenen Ausführungsbeispiel wurde von einer 1:n Struktur ausgegangen. Dies bedeutet, daß für n Betriebsstrecken lediglich eine Ersatzstrecke zur Verfügung steht. Ein Spezialfall ist also dann gegeben, wenn n=1 gilt. In diesem Fall wird also eine 1:1 Struktur verwendet. Die entsprechenden Verhältnisse sind in Fig. 2 aufgezeigt.

Auch in diesem Fall ist die Selektionseinrichtung als ATM-Koppelgeld ausgebildet, so daß ein Durchschalten nach Maßgabe der VPI Nummer erfolgt. In den Vermittlungseinrichtungen gemäß Fig. 2 sind ebenso - nicht aufgezeigte - zentrale Steuereinrichtungen mit lokalen und globalen Prioritätstabellen enthalten.

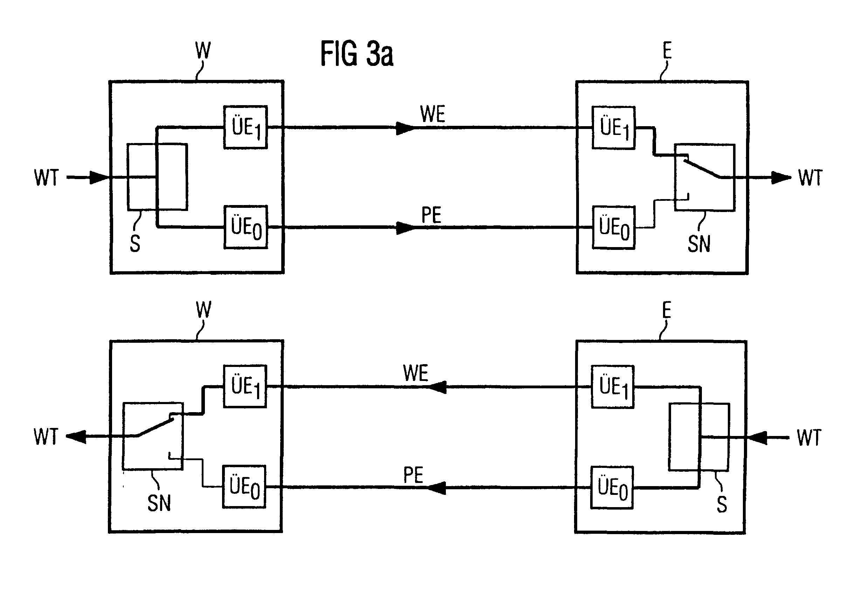

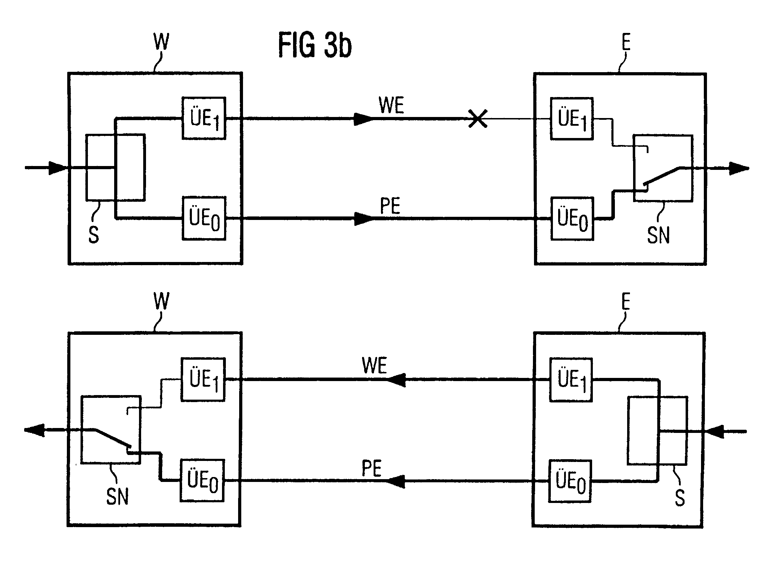

Eine weitere Ausgestaltung der Erfindung ist in Fig. 3 aufgezeigt. Dabei handelt es sich um eine 1+1 Struktur. Diese Struktur ergibt sich aus der 1:n Struktur, indem die Schaltvorrichtungen S fest eingestellt werden und nicht mehr über die zentralen Steuervorrichtungen ZST steuerbar sind. Damit werden die ATM-Zellen auch im störungsfreien Betriebsfall sowohl über die Betriebsstrecke WE als auch die Ersatzstrecke PE geleitet. Die Selektionseinrichtung SN ist hier nicht als ATM-Koppelfeld ausgebildet, sondern als Schaltvorrichtung. Das Ersatzschalteprotokoll ES nimmt in diesem Fall eine einfachere Form an. Die Informationen K2 beschreiben hier den Zustand der Selektionsvorrichtung. Immer dann, wenn im Falle der 1:n Struktur die Schaltvorrichtungen S₀...Sₙ gesteuert wurden, wird im Falle der 1+1 Strukur stattdessen die Selektionsvorrichtung SN gesteuert.

## Patentansprüche

1. Verfahren zum Ersatzschalten von Übertragungseinrichtungen zur bidirektionalen Übertragung von ATM-Zellen, mit
zwei Vermittlungseinrichtungen (W, E) die jeweils einen aus einer Mehrzahl von Betriebsstrecken (WE₁...WEₙ) gebildeten Übertragungsabschnitt abschließen, und die Informationen in ATM-Zellen über die Mehrzahl von Betriebsstrecken (WE₁...WEₙ) der jeweils empfangenden Vermittlungseinrichtung (W, E) zuführen sowie mit Überwachungseinrichtungen (ÜE₁...ÜEₙ), die jeweils am Ende einer Betriebsstrecke angeordnet sind und von der eine Störung der Betriebsstrecke ermittelt wird,
**dadurch gekennzeichnet,**
**daß** zusätzlich eine Ersatzstrecke (PE) zwischen den beiden Vermittlungseinrichtungen (W, E) vorgesehen wird, über die im Falle einer Störung auf einer der Betriebsstrecken (WE₁..WEₙ) die hierüber übertragen ATM-Zellen nach Maßgabe von Prioritätskriterien sowie von im Zellenkopf der ATM-Zellen enthaltenen logischen Verbindungsinformationen übertragen und den weiteren Einrichtungen des ATM-Netzes zugeführt werden, wobei den Betriebsstrecken (WE₁...WEₙ) sowie der Ersatzstrecke (PE) eine Priorität zugewiesen wird.

2. Verfahren nach Anspruch 1,
**dadurch gekennzeichnet,**
**daß** im Ersatzschaltefall eine Ersatzschalteanforderung (K1) generiert wird, der weitere Prioritäten zugewiesen werden.

3. Verfahren nach Anspruch 1,
**dadurch gekennzeichnet,**
**daß** die logische Verbindungsinformation die Nummer des virtuellen Pfades (VPI) ist.

4. Verfahren nach Anspruch 1 bis 3,
**dadurch gekennzeichnet,**
**daß** Prioritätstabellen (PL, PG) vorgesehen werden, in der die Prioritäten festgelegt werden.

5. Verfahren nach einem der Ansprüche 1 bis 4,
**dadurch gekennzeichnet,**
**daß** die Ersatzschaltung durch Ansteuern einer in der sendenden Vermittlungseinrichtung enthaltenden Schaltvorrichtung (S₀...Sₙ) sowie unter Verwendung einer in der empfangenden Vermittlungseinrichtung angeordneten Selektionseinrichtung (SN) erfolgt.

6. Verfahren nach einem der Ansprüche 5,
**dadurch gekennzeichnet,**
**daß** die Selektionseinrichtung (SN) als ATM-Koppelfeld ausgebildet ist.

7. Verfahren nach einem der vorstehenden Ansprüche,
**dadurch gekennzeichnet,**
**daß** über die Ersatzstrecke (PE) in betriebsstörungsfreien Zeiten Sonderdaten übertragen wird.

8. Verfahren nach einem der vorstehenden Ansprüche,
**dadurch gekennzeichnet,**
**daß** bei Eintreffen einer Ersatzschalteanforderung in der empfangenden Vermittlungseinrichtung ein Ersatzschalteprotokoll (ES) generiert wird, das lediglich einmal über die Ersatzstrecke (PE) der verbleibenden Vermittlungseinrichtung zugeführt wird.

9. Verfahren nach einem der vorstehenden Ansprüche,
**dadurch gekennzeichnet,**
**daß** Totalaufall und Verschlechterung einer Betriebsstrecke in der Überwachungseinrichtung der empfangenden Vermittlungseinrichtung ermittelt werden.

10. Verfahren nach Anspruch 5,
**dadurch gekennzeichnet,**
**daß** Schaltvorrichtung fest einstellbar ist.

11. Verfahren nach einem der vorstehenden Ansprüche,
**dadurch gekennzeichnet,**
**daß** die Vermittlungseinrichtungen als Crossconnect- Schalteinrichtungen ausgebildet sind.

## Claims

1. A method for switching transmission devices to an equivalent circuit for bidirectional transmission of ATM cells, having two switching centres (W, E), each of which terminates a transmission section formed from a plurality of service links (WE₁...WEₙ), and which supply information in ATM cells over the plurality of service links (WE₁...WEₙ) of the respective receiving switching centre (W, E), and also providing monitoring devices (ÜE₁...ÜEₙ), each of which is disposed at the end of a service link and by which a fault on the service link is determined,
**characterised in that**
a standby link (PE) is provided in addition between the two switching centres (W, E), via which link, in the event of a fault on one of the service links (WE₁...WEₙ), the ATM cells which are transmitted on these service links are transmitted according to priority criteria and logical connection information contained in the cell header of the ATM cells and supplied to the further devices of the ATM network, a priority being assigned to the service links (WE₁...WEₙ) and to the standby link (PE).

2. The method as claimed in Claim 1,
**characterised in that**
if a situation for switching to an equivalent circuit arises, an equivalent circuit request (K1) is generated, to which further priorities are assigned.

3. The method as claimed in Claim 1,
**characterised in that**
the logical connection information is the number of the virtual path (VPI).

4. The method as claimed in Claim 1,
**characterised in that**
priority tables (PL, PG) are provided, in which the priorities are defined.

5. The method as claimed in one of Claims 1 to 4,
**characterised in that**
the switching to an equivalent circuit is effected by activation of a switching device (S₀...Sₙ) contained in the transmitting switching centre and by use of a selection device (SN) disposed in the receiving switching centre.

6. The method as claimed in Claim 5,
**characterised in that**
the selection device (SN) is embodied as an ATM switching matrix.

7. The method as claimed in one of the preceding Claims,
**characterised in that**
special data is transmitted over the standby link (PE) during times which are free of service faults.

8. The method as claimed in one of the preceding Claims,
**characterised in that**
when an equivalent circuit request arrives in the receiving switching centre, an equivalent circuit switching protocol (ES) is generated which is supplied only once to the remaining switching centre over the standby link.

9. The method as claimed in one of the preceding Claims,
**characterised in that**
total failure and degradation of a service link are determined in the monitoring device of the receiving switching centre.

10. The method as claimed in Claim 5,
**characterised in that**
the switching device can be permanently set.

11. The method as claimed in one of the preceding Claims,
**characterised in that**
the switching centres are embodied as cross-connect switching devices.

## Revendications

1. Procédé pour la commutation sur circuit de secours d'unités de transmission aux fins du transfert bidirectionnel de cellules MTA, comportant deux commutateurs (W, E) qui constituent chacune la terminaison d'une section de transmission formée d'une pluralité de trajets de service (WE₁...WEₙ), et qui transmettent des informations dans des cellules MTA via la pluralité de trajets de service (WE₁...WEₙ) au commutateur récepteur correspondant (W, E), ainsi que des dispositifs de contrôle (ÜE₁...ÜEₙ), qui sont disposés à une extrémité respective d'un trajet de service et qui détectent une perturbation du trajet de service,
**caractérisé en ce que**
un trajet de secours (PE) est en plus prévu entre les deux commutateurs (W, E) au moyen duquel en cas de défaut sur l'un des trajets de service (WE₁...WEₙ) les cellules MTA transmises par ceux-ci, sont transmises et amenées aux autres dispositifs du réseau MTA conformément à des critères de priorité ainsi qu'à des informations de connexion logiques contenues dans l'en-tête de cellule des cellules MTA, une priorité étant attribuée aux trajets de service (WE₁...WEₙ) ainsi qu'au trajet de secours (PE).

2. Procédé selon la revendication 1, **caractérisé en ce qu'**en cas de commutation sur circuit de secours une demande de commutation sur circuit de secours (K1) est générée, à laquelle des priorités supplémentaires sont attribuées.

3. Procédé selon la revendication 1, **caractérisé en ce que** l'information de connexion logique est le numéro du chemin virtuel (VPI).

4. Procédé selon la revendication 1 à 3, **caractérisé en ce que** des tables de priorité (PL, PG) sont prévues, dans lesquelles les priorités sont définies.

5. Procédé selon l'une des revendications 1 à 4, **caractérisé en ce que** la commutation sur circuit de secours s'effectue en excitant un dispositif de commutation (S₀...Sₙ) contenu dans le commutateur émetteur ainsi qu'en utilisant un dispositif de sélection (SN) disposé dans le commutateur récepteur.

6. Procédé selon l'une des revendications 5, **caractérisé en ce que** le dispositif de sélection (SN) est conçu comme champ de couplage MTA.

7. Procédé selon l'une des revendications précédentes, **caractérisé en ce que** des données spéciales sont transmises via le trajet de secours (PE) dans les périodes sans perturbation de service.

8. Procédé selon l'une des revendications précédentes, **caractérisé en ce qu'**à l'arrivée d'une demande de commutation sur circuit de secours dans le commutateur récepteur un protocole de commutation sur circuit de secours (ES) est généré, qui est amené une seule fois au commutateur restant via le trajet de secours (PE).

9. Procédé selon l'une des revendications précédentes, **caractérisé en ce que** la panne générale et la détérioration d'un trajet de service sont déterminées dans le dispositif de contrôle du commutateur récepteur.

10. Procédé selon la revendication 5, **caractérisé en ce que** le dispositif de commutation peut être réglé de manière fixe.

11. Procédé selon l'une des revendications précédentes, **caractérisé en ce que** les commutateurs sont conçus comme des dispositifs d'interconnexion crossconnect.
